# EUROPEAN PATENT APPLICATION

(11) **EP 2 629 506 A1**
(43) Date of publication of application: **21.08.2013**
(21) Application number: 12155650.0
(22) Date of filing: 15.02.2012
(51) Int. Cl.: H04N 5/232, H04N 7/18

(54) **Two-step brightness adjustment in around-view systems**

(71) Applicant: Harman Becker Automotive Systems GmbH, 76307 Karlsbad (DE)
(72) Inventor: Quast, Johannes, 76133 Karlsruhe (DE); Scholl, Kay-Ulrich, 76307 Karlsbad (DE); Gassmann, Bernd, 75334 Straubenhardt (DE)
(74) Representative: Patentanwälte Westphal, Mussgnug & Partner

(57) **Abstract**

An around view system is described. In accordance with a first example of the invention the system comprises at least two cameras providing images covering different fields of view of an environment. Each camera is configured to capture images using an adjustable exposure time. Further, an exposure time control unit is provided that is configured to determine, for each camera, at least one brightness parameter from image data provided by the camera. The exposure time control unit is further configured to control the exposure times of the individual cameras such that the brightness parameter(s) determined for a first camera at least approximately match(es) corresponding brightness parameter(s) determined for a second camera.

## Description

### Technical Field

The present invention relates to around-view camera systems, in particular for the use in connection with parking assistance systems in automobiles.

### Background

Generally, a vehicle includes a side-view mirror and a rear-view mirror in order to enable a driver to overlook the surroundings of the vehicle. However, there exists a "blind spot" (i.e. an area out of the driver's vision) which the driver may not be able to see when using the mirrors. In order to minimize the area concealed by the blind spot, additional mirrors may be attached to the vehicle body. However, even by using such additional mirrors provided at the vehicle body, it is not easy to completely eliminate the blind spot(s). Furthermore, in the case where such a mirror is attached to the vehicle body, the design of the vehicle may be compromised. To alleviate the problem, around-view camera systems have been suggested. One such system is described, for example, in the publication US 2010/0245577 A1. Nissan advertises such a system under the name "Around View Monitor".

Existing around view camera systems use multiple cameras (e.g., front-view camera, rear-view camera, and left and right side-view cameras) to provide different images covering (almost completely) the area directly surrounding the vehicle. In order to maximize the field of view of the individual cameras the cameras may be equipped with wide-angle lenses (sometimes called "fish-eyes"). The images captured by the individual cameras are consolidated to one single "overall image" covering the surroundings of the vehicle. Such consolidation is usually achieved using an image processing unit executing appropriate image-stitching algorithms which must accomplish the image-processing task in real time in order to provide live images. However, the brightness of the individual images may significantly differ, particularly when the sun is shining and the vehicle casts shadows into the field of view of some of the cameras used.

Stitching together images of significantly different brightness may lead to a sub-optimal quality of the resulting overall image. Furthermore, due to the real-time requirements many common image-stitching algorithms cannot be used unless very expensive computation hardware is provided (which is usually undesired in automotive applications). Thus, there is a general need for an around view system which is able to generate overall images from the images captured by the individual cameras and which ensures that the transitions between the individual images are smooth and scarcely visible in the consolidated overall image. Furthermore, the hardware requirements should be kept to a minimum.

### Summary of the Invention

An around view system is described. In accordance with a first example of the invention, the system comprises at least two cameras providing images covering different fields of view of an environment. Each camera is configured to capture images using an adjustable exposure time. Furthermore, an exposure time control unit is provided that is configured to determine, for each camera, at least one brightness parameter from image data provided by the camera. The exposure time control unit is further configured to control the exposure times of the individual cameras such that the brightness parameter(s) determined for a first camera at least approximately match(es) corresponding brightness parameter(s) determined for a second camera.

Furthermore, a method for generating around view images is described, whereby at least two cameras are used for providing images covering different fields of view. In accordance with one example of the invention, the method comprises capturing images with each camera using an adjustable exposure time and adjusting the exposure times. Adjusting the exposure times includes determining, for each camera, at least one brightness parameter from image data provided by the respective camera and, controlling the exposure times of the individual cameras such that the brightness parameter(s) determined for a first camera at least approximately match(es) (a) corresponding brightness parameter(s) determined for a second camera.

### Brief description of the Drawings

The invention can be better understood with reference to the following drawings and descriptions. The components in the figures are not necessarily to scale, instead emphasis is placed on illustrating the principles of the invention. Moreover, in the figures like reference numerals designate corresponding parts. In the drawings:
- FIG. 1: illustrates an around view system including four cameras arranged on each side (front, right, left, rear) of a vehicle;
- FIG. 2: illustrates the concept of a common exposure time control for all cameras of the around view system;
- FIG. 3: illustrates one example of determining a brightness parameter by averaging; and
- FIG. 4: illustrates one example of brightness adjustment and image stitching.

### Detailed Description

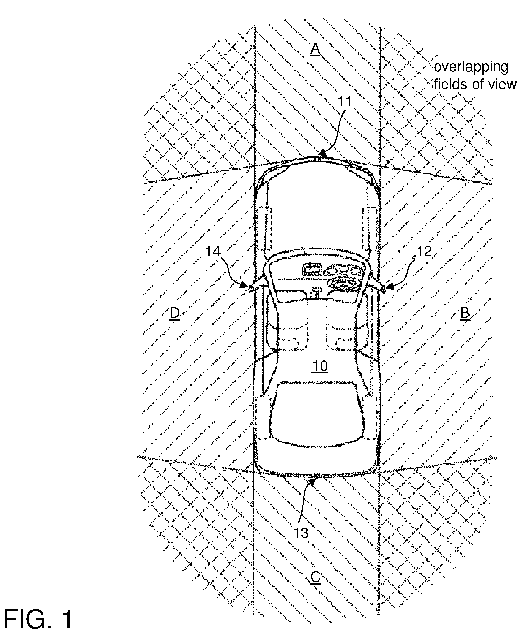

An example of an around view system for an automobile is described in the following with reference to the drawings. FIG. 1 schematically illustrates a "bird-eye" view (top view) of a vehicle 10 including a plurality of camera devices 11, 12, 13, and 14 for monitoring the surroundings of the vehicle. The camera devices are equipped with a "fish-eye" lens (an ultra wide-angle lens) so as to achieve a wide field of view. In the present example a front camera 11, two side cameras 12 and 14 and a rear camera 13 are provided at the vehicle, whereby the field of view (denoted as A, B, C, D in FIG. 1) of each camera covers a different part of the vehicle's surroundings. The cameras are configured in such a manner that the fields of view of two adjacent (neighboring) cameras overlap. The fields of view (B and D) of the side cameras 12 and 14 are illustrated in FIG. 1 by the areas hatched with dash-dotted lines, whereas the fields of view (A and C) of the front and rear camera 11, 13 are illustrated by the areas hatched with solid lines. The overlapping part of two fields of view has both hatch patterns. The camera devices may include, for example, a CCD or a CMOS image sensor and suitable camera lenses.

The front camera 11 may be arranged, for example, at a front part of the vehicle 10 so as to provide an image of the area A extending to the front of the vehicle. The side cameras 12 and 14 may be arranged at a side mirror of the vehicle 10 so as to provide images of the areas B and D extending to the right and left of the vehicle, respectively. The rear camera is arranged to capture a view of the area D extending to the rear of the vehicle. As shown in FIG. 1, the views captured by two neighboring cameras overlap. That is, the marginal regions of the images provided by two neighboring cameras (i.e. cameras 11 and 12, cameras 12 and 13, cameras 13 and 14, and cameras 14 and 11) cover the same segments of the vehicle's surroundings.

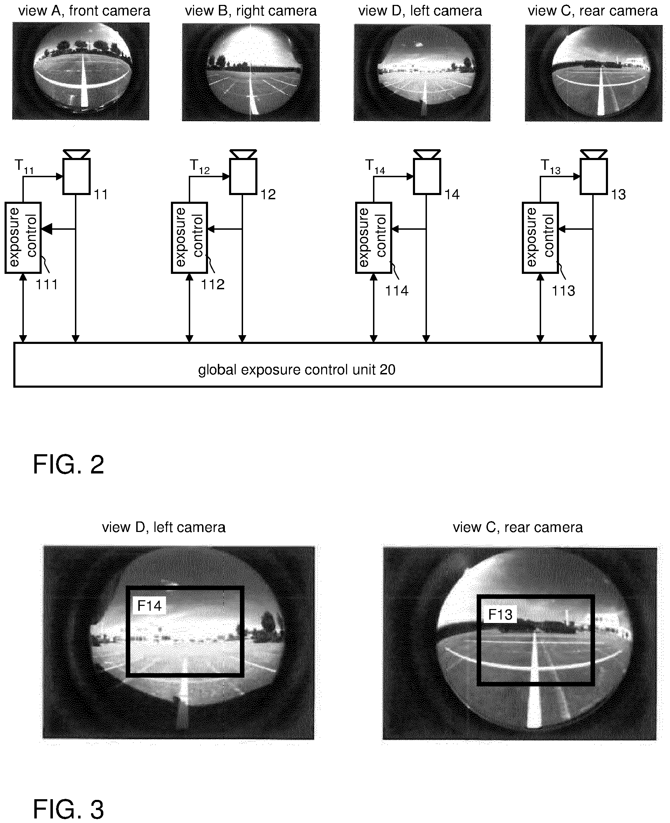

FIG. 2 illustrates the concept and the structure of a common ("global") exposure time control applied to all cameras 11, 12, 13, and 14 of the around view system. As already mentioned, the same part of the surrounding area (in the regions where the fields of view of two cameras overlap) may appear differently bright on images captured by two adjacent cameras when using identical exposure times with all cameras. This may be particularly the case when the sun is shining and, as a result, the cameras which are (more or less) directly facing the sun provide images with a higher brightness than those cameras which "look into" the shadow cast by the car. When the images are stitched together to one "overall image", the abrupt brightness changes are visible in the image regions of transition between two individual images. In other words, the positions where the individual images have been stitched together are clearly visible and may be irritating for the user of the around view system. There are highly sophisticated image stitching algorithms known in the field which are able to process and stitch together images of significantly different brightness. However, these algorithms require expensive hardware and can thus not be used in the design of a low-cost system, as is typically required for automotive applications.

To eliminate or at least alleviate this problem a two-step process is used. In a first step, the exposure times of the individual cameras are adjusted such that one or more brightness parameters determined for a one camera at least approximately match one or more corresponding brightness parameters determined for an adjacent camera. Generally, two cameras are regarded as adjacent when their respective fields of view partially overlap, as illustrated in FIG. 1. Those parts of the images captured by two adjacent cameras which represent the same piece of environment are referred to as corresponding "marginal regions" of the two respective images.

A brightness parameter, which may be determined for each individual camera, may represent the brightness (i.e. a numeric value measured for each individual pixel of a camera) of one or more pixels of one image captured by the respective camera. For example the current brightness parameter for camera 13 may be determined by averaging the brightness of the pixels which are located within a defined sub-image of the image currently captured by camera 13. In the illustration of FIG. 3 this sub-image is denoted as frame F13. The same situation is shown for the left camera 14. To summarize the function of the exposure time control unit 20 illustrated in FIG. 2, the exposure times of the cameras 11, 12, 13, 14 are adjusted such that the brightness parameter(s) determined for the individual cameras 11, 12, 13, 14 (e.g. the average brightness of the pixels within the frames F11,F12, F13, F14 corresponding to the respectively captured images) are approximately equal.

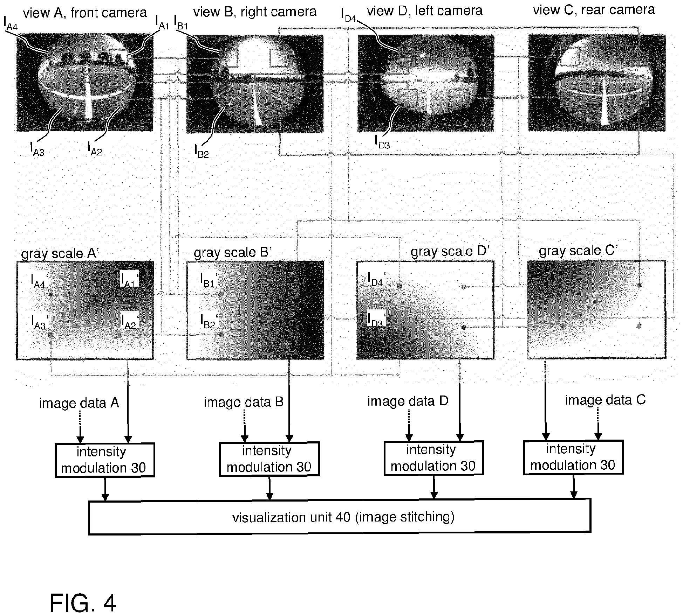

The first step of the two-step process results in images which have approximately equal average brightness values. However, when stitching the images together without performing additional image processing the transitions between the individual images remain visible and thus the image quality still requires improvement, which can be done in a second step of the two-step process explained below. According to one example of the invention, the brightness of the captured images is manipulated using interpolated gray scale images (e.g. a kind of gray wedges) to correct the pixel values (i.e. the brightness of the pixels) such that the brightness of pre-defined image regions in the marginal region of each image matches the brightness of corresponding image regions of corresponding marginal regions of adjacent images. In this context corresponding image regions are regarded as representing the same part of the surrounding area. This simple-to-implement image correction is further illustrated with reference to FIG. 4.

The following description refers to the brightness correction of the image A provided by the front camera 11. However, the same procedure is also applicable for the images provided by the other cameras 12, 13, 14. As illustrated in FIG. 4, brightness values are calculated which represent the (e.g. average) brightness of the image regions I_{A1}, I_{A2}, I_{A3}, and I_{A4} located in the marginal region of the image A provided by the front camera 11. Furthermore, the brightness values of the corresponding image regions I_{B}, and I_{B2} in the marginal region of the image B (right camera) and the image regions I_{D3} and I_{D4} in the marginal region of the image D (left camera) are determined. It should be noted that each corresponding pair of image regions I_{A1} and I_{B1}, I_{A2} and I_{B2}, I_{A3} and I_{D3}, and I_{A4} and I_{D4}, respectively, represents the same part of the surrounding area. For each one of the considered image regions I_{A1}, I_{A2}, I_{A3}, I_{A4}, etc. a corresponding local brightness correction factor I_{A1}', I_{A2}', I_{A3}', I_{A4}', etc is calculated. The local brightness correction factors are calculated such that the corrected images have approximately the same local (e.g. average) brightness value in corresponding image regions I_{A1} and I_{B1}, I_{A2} and I_{B2}, I_{A3} and I_{D3}, and I_{A4} and I_{D4}, etc. In such a manner a predefined number (four in the present example) of local correction factors are determined for each image. Based on the calculated correction factors (I_{A1}', I_{A2}', I_{A3}', I_{A4}' for the image A) a gray scale image A' (a kind of two-dimensional "gray wedge") can be calculated, e.g. using bilinear interpolation. This gray scale image A' can be used to scale the brightness values composing the image A. The same procedure is performed for each image A, B, C, D provided by the respective cameras, 11, 12, 13, and 14. In FIG. 4 this scaling is performed by the intensity modulation unit 30 which- in a simple exemplary implementation - merely calculates the product of the image A and the corresponding gray scale image A' (and analogously for the other images). The resulting brightness corrected images may be provided to a visualization unit 40 which performs a simple image stitching algorithm without the need for sophisticated brightness adjustment.

Below some aspects of the around view system described herein are summarized in reference to the Figures 1, 2 and 4. It should be understood, however, that the list below is not exhaustive and covers only some exemplary features of the invention. One exemplary aspect of the invention relates to an around view system. An around view does not necessarily need to cover a 360 degree panorama view. However, panorama images are provided based on images captured by at least two cameras (cf. cameras 11 to 14 in FiGs. 1 and 2), whereby the images of different cameras cover different fields of view (cf. views A to D in FiGs. 2 and 4) of an environment. Each camera 11, 12, 13, and 14 is configured to capture images A, B, C, and D using an adjustable exposure time T₁₁, T₁₂, T₁₂, and T₁₄, respectively. Furthermore, an exposure time control unit 20 is configured to determine, for each camera 11, 12, 13, and 14, at least one brightness parameter from image data provided by the respective camera. The exposure time control unit 20 is further configured to control the exposure times of the individual cameras 11, 12, 13, and 14, such that the brightness parameter(s) determined for a first camera (e.g. camera 11) at least approximately match(es) corresponding brightness parameter(s) determined for at least a second camera (e.g. cameras 12 to 14). The brightness parameters may represent the average brightness of one or more sub-images of the camera images.

The around view system may further include an intensity modulation unit 30 which is configured to adjust the brightness of each image A, B, C, and D locally in such a manner that - after the adjustment - local brightness values calculated for corresponding image regions (see, e.g., regions I_{A1} and I_{B1} in FIG. 4) of images provided by two adjacent cameras (camera 11 and 12 in the present example) at least approximately match. The local brightness value may again be calculated by averaging the brightness of the pixels located within the mentioned image regions (i.e. calculating the average brightness of regions I_{A1}, I_{A2}, etc.). Two corresponding image regions (e.g., regions I_{A1} and I_{B1}) of images (e.g., image A and B) provided by two adjacent cameras (cameras 11 and 12 in the present example) are located in marginal regions of the respective images and represent the same part of the surrounding area. In accordance with one exemplary implementation, gray scale images A', B', C', and D' are provided for locally adjusting the brightness of the images A, B, C, and D, respectively, by multiplying the images A, B, C, and D with corresponding gray scale images A', B', C', and D'. The gray scale images A', B', C', and D' are calculated using interpolation and previously determined local brightness correction factors, which are calculated for defined image regions (I_{A1} to I_{A4}, I_{B1} to I_{B4}, etc.) located in the marginal regions of the images. The brightness correction factors are calculated such that - after correction - local brightness values calculated for corresponding image regions of images provided by two adjacent cameras at least approximately match. A visualization unit 40 is provided for stitching the (intensity modulated) images provided by the cameras together so as to generate one around view image.

Another aspect of the invention relates to a method for generating around view images, whereby at least two cameras (cameras 11 to 14 in the example of FIG. 1) are used for providing images covering different fields of view (cf. views A to D in FIG. 1, 2 and 4). In accordance with one example of the invention, the method comprises capturing images A, B, C, or D with each camera 11,12, 13, and 14 using an adjustable exposure time T₁₁, T₁₂, T₁₃, and T₁₄. Adjusting the exposure times T₁₁, T₁₂, T₁₃, and T₁₄ includes determining, for each camera, at least one brightness parameter from image data provided by the respective camera and, further, controlling the exposure times T₁₁, T₁₂, T₁₃, and T₁₄ of the individual cameras 11,12, 13, and 14 such that the brightness parameter(s) determined for a first camera at least approximately match(es) (a) corresponding brightness parameter(s) determined for at least a second camera.

The method may further include adjusting the brightness of each image (see FIG. 4, images A to D) locally in such a manner that - after the adjustment - local brightness values calculated for corresponding image regions (see FIG. 4, e.g., regions I_{A1} and I_{B1}) of images provided by two adjacent cameras (cameras 11 and 12 in the present example) at least approximately match. Two corresponding image regions of images provided by two adjacent cameras are located in marginal regions of the respective images and represent the same piece of environment. In accordance with one exemplary implementation, local brightness correction factors are determined for defined image regions (e.g., I_{A1}, I_{B1}, etc.) located in the marginal regions of the images. The brightness correction factors are calculated such that - after the adjustment - local brightness values, which can be calculated for corresponding image regions of images provided by two adjacent cameras, at least approximately match. Further, gray scale images A', B', C', and D' are calculated for locally adjusting the brightness of the image A, B, C, and D, respectively, using interpolation and the previously determined local brightness correction factors. The image provided by the respective camera and the corresponding gray scale image are then multiplied for adjusting the brightness.

In accordance with one exemplary implementation, the calculation of a brightness parameter for the image region (e.g. regions I_{A1}) of a first image (e.g., image A) includes calculating a brightness parameter for the corresponding image region (regions I_{B1} in the present example) of a second image (image B in the present example) provided by an adjacent camera, and calculating the local brightness correction factor for the two corresponding image regions (e.g. I_{A1} and I_{B1}) such that the corresponding products of correction factors and brightness parameter are approximately equal.

Although various exemplary embodiments of the invention have been disclosed, it will be apparent to those skilled in the art that various changes and modifications can be made which will achieve some of the advantages of the invention without departing from the spirit and scope of the invention. It will be obvious to those reasonably skilled in the art that other components performing the same functions may be suitably substituted. It should be mentioned that features explained with reference to a specific figure may be combined with features of other figures, even of those figures in which the features have not explicitly been mentioned. Furthermore, the methods of the invention may be achieved in either all software implementations, using the appropriate processor instructions, or in hybrid implementations that utilize a combination of hardware logic and software logic to achieve the same results. Such modifications to the inventive concept are intended to be covered by the appended claims.

## Claims

1. An around view system comprising:
at least two cameras providing images covering different fields of view, each camera is configured to capture images using an adjustable exposure time; and
an exposure time control unit that is configured to determine, for each camera, at least one brightness parameter from image data provided by the respective camera, and further configured to control the exposure times of the individual cameras such that the brightness parameter(s) determined for a first camera at least approximately match(es) corresponding brightness parameter(s) determined for a second camera.

2. The around view system of claim 1 wherein the cameras are arranged such that the fields of view of two adjacent cameras overlap.

3. The around view system of claim 2 wherein, for each camera, the brightness parameters represents the average brightness of one or more respective sub-images of the images provided by the camera.

4. The around view system of claim 2 or 3, further comprising:
an intensity modulation unit configured to adjust the brightness of each image locally, such that - after the adjustment - local brightness values calculated for corresponding regions of images provided by two adjacent cameras at least approximately match, wherein two corresponding regions of images provided by two adjacent cameras are located in marginal regions of the respective images and represent the same part of the surrounding area.

5. The around view system of claim 4, wherein the intensity modulation unit is further configured to calculate, for each camera, a gray scale image for locally adjusting the brightness of the images provided by the respective camera, the gray scale images are calculated using interpolation and previously determined local brightness correction factors, which are calculated for defined image regions located in the marginal regions of the images, the brightness correction factors are calculated such that - after correction - local brightness values calculated for corresponding regions of images provided by two adjacent cameras at least approximately match.

6. The around view system of claim 5, wherein the intensity modulation unit is configured to multiply the images provided by the cameras with the respective gray scale images so as to generate corresponding intensity modulated images.

7. The around view system of claim 5, wherein the gray scale images are calculated using bilinear interpolation between the previously determined local brightness correction factors.

8. The around view system of one of the claims 1 to 7 further comprising a visualization unit configured to stitch the images provided by the cameras together so as to generate one around view image.

9. A method for generating around view images using at least two cameras for providing images covering different fields of view, the method comprises:
capturing images with each camera using an adjustable exposure time; and
adjusting the exposure times which includes
determining, for each camera, at least one brightness parameter from image data provided by the respective camera,
controlling the exposure times of the individual cameras such that the brightness parameter(s) determined for a first camera at least approximately match(es) corresponding brightness parameter(s) determined for a second camera.

10. The method of claim 9 wherein the images captured with adjacent cameras at least partially overlap.

11. The method of claim 10 wherein determining at least one brightness parameter comprises:
calculating the average brightness of one or more respective sub-images of the images provided by the respective camera.

12. The method of claim 10 or 11 further comprising:
adjusting the brightness of each image locally in such a manner that - after the adjustment - local brightness values calculated for corresponding regions of images provided by two adjacent cameras at least approximately match, wherein two corresponding regions of images provided by two adjacent cameras are located in marginal regions of the respective images and represent the same part of the surrounding area.

13. The method of claim 12 wherein adjusting the brightness of one image includes:
determining local brightness correction factors for defined image regions located in the marginal regions of the images, the brightness correction factors are calculated such that - after the adjustment - local brightness values calculated for corresponding regions of images provided by two adjacent cameras at least approximately match;
calculating a gray scale image for locally adjusting the brightness of the image using interpolation and the previously determined local brightness correction factors;
multiplying the image provided by the respective camera and the corresponding gray scale image.

14. The method of claims 12 or 13 further comprising
stitching the brightness adjusted images together so as to generate one around view image.

15. The method of claim 12 wherein determining local brightness correction factors for defined image regions includes:
calculating a brightness parameter for the region of a first image;
calculating a brightness parameter for the corresponding region of a second image provided by an adjacent camera;
calculating the local brightness correction factor for the two corresponding image regions such that the corresponding products of correction factors and brightness parameter are approximately equal.
